# EUROPÄISCHE PATENTSCHRIFT

(11) **EP 0 984 344 B1**
(45) Veröffentlichungstag und Bekanntmachung des Hinweises auf die Patenterteilung: **20.12.2006**
(21) Anmeldenummer: 99115601.9
(22) Anmeldetag: 06.08.1999
(51) Int. Cl.: G05B 19/418

(54) **System zur Verkabelung einer Steuer- und Datenübertragungsanlage**
Sytem for cable-connection of a control and data transmission installation
Système de câblage d'un dispositif de commande et de transmission de données

(30) Priorität: 08.08.1998 DE 29814268 U
(43) Veröffentlichungstag der Anmeldung: 08.03.2000
(73) Patentinhaber: PHOENIX CONTACT GmbH & Co. Kg, 32825 Blomberg (DE)
(72) Erfinder: Meyer-Gräfe, Karsten, 33161 Hövelhof (DE); Behr, Thorsten, 32805 Horn- Bad Meinberg (DE)
(74) Vertreter: Blumbach - Zinngrebe

(56) Entgegenhaltungen:
- EP-A- 0 275 992
- DE-U- 29 617 686
- DE-U- 29 718 102

## Beschreibung

Die Erfindung betrifft ein System zur Verkabelung einer Steuer- und Datenübertragungsanlage gemäß dem Oberbegriff des Anspruchs 1.

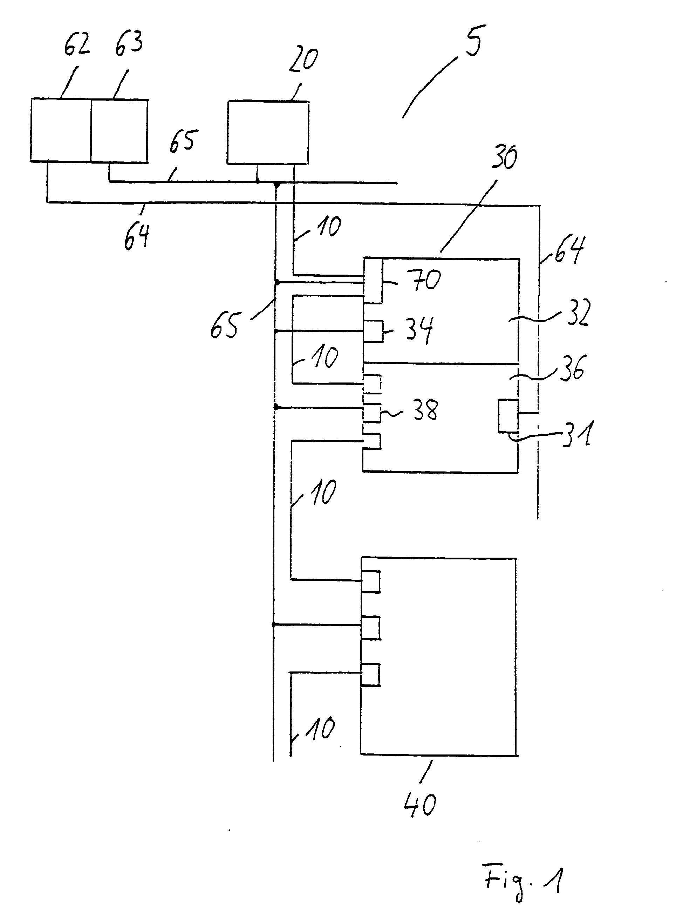

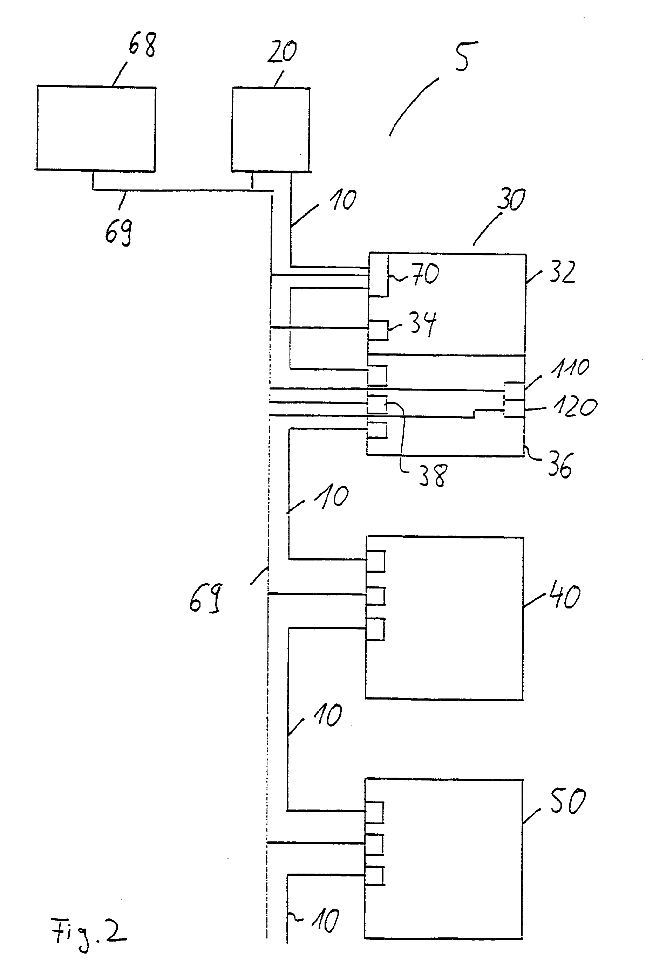

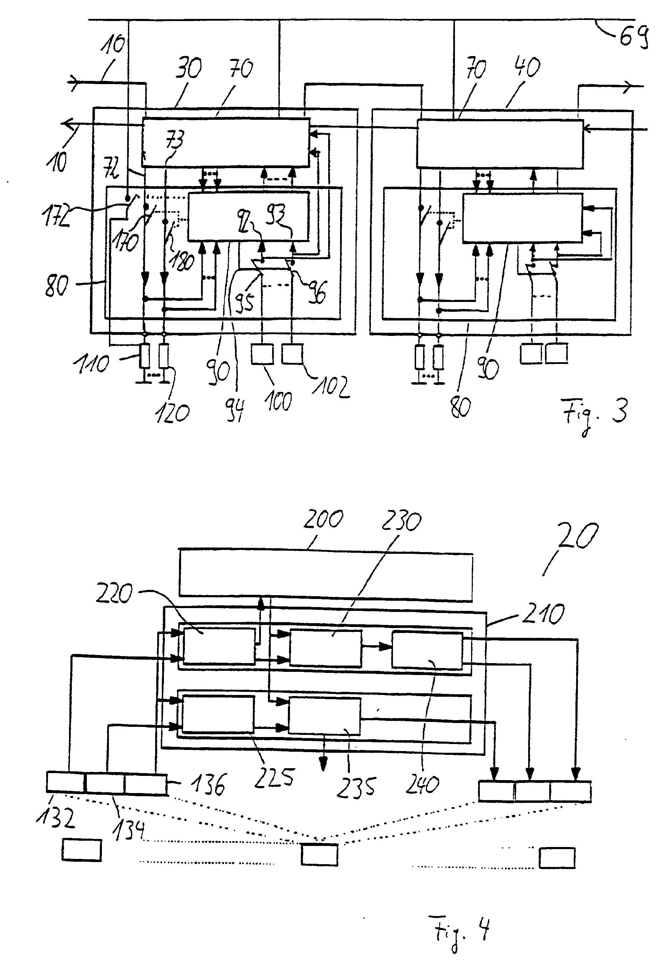

Durch den ständig wachsenden Grad der Automatisierung von Maschinen und Anlagen werden immer mehr Sensoren und Aktoren eingesetzt, die die Produktion steuern und die Qualität der Produkte überwachen können. Solche Automatisierungsanlagen umfassen mindestens eine überlagerte Steuerungseinrichtung, beispielsweise eine speicherprogrammierbare Steuerung (SPS), an die mehrere Sensoren und Aktoren, auch als Eingabe-/Ausgabegeräte bezeichnet, angeschlossen sind. Zu Beginn der Entwicklung derartiger Automatisierungsanlagen wurden die Sensoren und Aktoren jeweils über eigene Leitungen, d. h. parallel an die überlagerte Steuerungseinrichtung angeschaltet. Ein wesentlicher Nachteil der Parallelverkabelung bei Automatisierungsanlagen ist insbesondere in der Verwendung von zentnerschweren Kabelbäumen und vielen Zwischenklemmen zu sehen. Aus diesem Grunde wurden Steuer- und Datenübertragungsanlagen entwickelt, die auf einem seriellen Feldbus, beispielsweise dem nach DIN 19258 festgelegten Interbus basieren. Ein solcher Interbus ist beispielsweise in dem Fachbuch "INTERBUS-S, Grundlagen und Praxis", Hüthig Buchverlag, Heidelberg 1994, von Alfredo Baginsky et al. näher beschrieben. Mit Hilfe eines solchen seriellen Feldbusses kann der Verkabelungsaufwand gegenüber Automatisationsanlagen mit paralleler Verkabelung deutlich verringert werden. Neben dem seriellen Feldbus zur Übertragung von Nutzdaten müssen ferner zwei separate Energieversorgungskabel zur Speisung von Logik- und Buskomponenten (z.B. Sensoren, Steuerungseinheiten) und zur Versorgung von Lasteinrichtungen (z.B. von Aktoren, wie Roboter, Schweißgeräte und dergleichen) verlegt werden. In Fig. 1 ist eine an sich bekannte, allgemein mit 5 bezeichnete Steuer- und Datenübertragungsanlage dargestellt, die zur Anschaltung von Busteilnehmern 30, 40 an eine übergeordnete Steuerungseinrichtung 20, wie z. B. eine Speicher-programmierbare Steuereinrichtung (SPS), einen seriellen, beispielsweise ringförmigen Feldbus 10 verwenden. In an sich bekannter Weise kann die übergeordnete Steuereinrichtung 20 Teil eines übergeordneten Feldbusses sein, an den mehrere separate Feldbusse 10 angeschaltet sein können. Die in Fig. 1 dargestellte Steuer- und Datenübertragungsanlage 20 verfügt ferner über zwei Spannungsquellen 62 und 63, die über ein Versorgungskabel 64 mit den, eine höhere Leistung benötigenden Lastkomponenten 31 z. B. eines digitalen Ausgangsmoduls 36 bzw. über ein weiteres separates Versorgungskabel 65 mit den Logikbausteinen der Steuer- und Datenübertragungsanlage 10, in Fig. 1 beispielsweise mit 20, 34 und 38, verbunden ist. Der Verkabelungsaufwand bei der nach Fig. 1 dargestellten Steuer- und Datenübertragungsanlage 5 ist jedoch aufgrund von zwei getrennten Versorgungseinrichtungen 62, 64 bzw. 63, 65 immer noch relativ hoch und stellt daher insbesondere bei der Installation eine nicht zu unterschätzende Fehlerquelle dar. Der Hauptgrund für die bisher immer noch übliche getrennte Verkabelung von Last- und Logikkomponenten besteht darin , daß bei einem fehlerhaften Betrieb bereits einer Lastkomponente, wie z. B. der Lastkomponente 31 die Lastspannung über das Versorgungskabel 64 vollständig von der Energieversorgungsquelle 62 abgetrennt werden muß, während die Versorgung der Steuerelektronik, d.h. der Logikbausteine 20, 34, 38 über das separate Versorgungskabel 65 aufrechterhalten werden kann und somit weiter funktionsfähig bleibt. Jedes Versorgungskabel 64 und 65 umfaßt in der Regel drei Adern, wobei eine Ader als Schutzleiter, eine zweite Ader das Bezugspotential und eine dritte Ader ein vorbestimmtes Versorgungspotential führt. Dadurch werden insgesamt sechs Adern zur Energieversorgung der Last- und Logikkomponenten benötigt.

Aus der DE 297 18 102 U1 ist ein Feldbus beschrieben, an den wenigstens ein Feldbus-Modul angeschlossen ist. An dem Feldbus-Modul sind Aktoren, Sensoren und ein Sicherheits-Türschalter angeschlossen. Ferner ist eine Versorgungsspannungsleitung vorgesehen, über die der Aktor gespeist wird. Der Gebrauchsmusterschrift ist nicht zu entnehmen, dass über die Versorgungsspannungsleitung auch Logik-Bausteine des Feldbus-Moduls gespeist werden können. Mit Hilfe eines übergeordneten Sicherheitsschaltgeräts kann die Versorgungsspannung abgeschaltet und somit die Speisung aller an die Versorgungsspannungsleitung angeschalteten Einrichtungen unterbrochen werden.

Der Erfindung liegt daher die Aufgabe zugrunde, ein System zur Verkabelung einer Steuer- und Datenübertragungsanlage bereitzustellen, bei dem der Verkabelungsaufwand, d. h. die Anzahl an Adern, weiter verringert und eine gezielte Abschaltung der Energieversorgung für fehlerhafte, dem Feldbus zugeordneten Komponenten erreicht, werden kann.

Der Kerngedanke der Erfindung ist darin zu sehen, anstelle der separaten Versorgung von Last- und Logikkomponenten einer Steuer- und Datenübertragungsanlage nur noch eine Versorgungseinrichtung und ein einziges Versorgungskabel zu verwenden, über das sowohl die Lastkomponenten als auch die Logikkomponenten mit der Energieversorgungseinrichtung verbunden sind. Gleichzeitig soll aber der Vorteil der bekannten Steuer- und Datenübertragungsanlage mit seperater Versorgung von Last- und Logikkomponenten, daß nach Ausfall einer Lastkomponente aus Sicherheitsgründen (z. B. Notaus) wenigstens die Funktionsfähigkeit der Logikbausteine und damit die der Systemsteuerung aufrechterhalten werden kann, ausgenutzt werden. Demzufolge ist in der Steuer- und Datenübertragungsanlage eine Sicherheitslogik implementiert, die derart ausgebildet ist, daß vorteilhafterweise nur die fehlerhaft arbeitende Lastkomponente von der zentralen Energieversorgungseinrichtung abgeschaltet wird. Insbesondere sorgt die in einer Lastkomponente implementierte sicherheitsbezogene Einrichtung dafür, daß im Falle einer nicht funktionsfähigen Lastkomponente ein entsprechendes Fehlersignal erzeugt und über den seriellen Feldbus zur übergeordneten Steuereinrichtung übertragen wird, die daraufhin die fehlerhafte Lastkomponente von der Energieversorgungseinrichtung abtrennt. Dies kann mit Hilfe einer Steuer- und Datenübertragungsanlage zum Übertragen von sicherheitsbezogenen Daten erreicht werden, die in der DE-OS 197 42 716.2 offenbart ist.

Das technische Problem wird durch die Merkmale des Anspruchs 1 gelöst.

Vorteilhafte Weiterbildungen sind in den Unteransprüchen umschrieben.

Um den Verkabelungsaufwand weiter reduzieren zu können, umfaßt der serielle Feldbus einen Lichtwellenleiter zur Übertragung von Nutzdaten und/oder von sicherheitsbezogenen Steuerdaten. Bisherige Feldbussysteme verwendeten einen Hin- und Rückleiter sowie eine Masseleitung zur Übertragung von Daten. Dabei dienen die Hin- und Rückleitungsadern der Übertragung von Differenzsignalen, mit deren Hilfe eine fehlerhafte Übertragung festgestellt werden kann.

Bei Verwendung eines Lichtwellenleiters als seriellen Feldbus ist es ferner möglich, das Energieversorgungskabel und den Lichtwellenleiter zusammen in einem Hybridkabel zu verlegen, ohne besonders abgeschirmte Kabel verwenden zu müssen. Solche kompakten Hybridkabel sind leichter und somit einfacher in der Handhabung, in kleineren Kabelkanälen verlegbar sowie kostengünstiger als bisherige Verkabelungen.

Die Erfindung wird nachfolgend anhand eines Ausführungsbeispiels in Verbindung mit den beiliegenden Zeichnungen näher erläutert. Darin zeigen:
- Fig. 1: ein stark vereinfachtes prinzipielles Blockschaltbild einer Steuer- und Datenübertragungsanlage mit einer Verkabelungstechnik nach dem Stand der Technik;
- Fig. 2: ein stark vereinfachtes schematisches Blockschaltbild einer Steuer- und Datenübertragungsanlage, in der die Erfindung verwirklicht ist;
- Fig. 3: ein Blockschaltbild der beiden Busteilnehmer nach Fig. 2, in denen jeweils eine sicherheitsbezogene Einrichtung implementiert ist;
- Fig. 4: das Blockschaltbild der in Fig. 2 gezeigten Master-Steuereinrichtung mit einer sicherheitsbezogenen Einrichtung; und
- Fig. 5: einen beispielhaften Datenrahmen, in dem sicherheitsbezogene Informationen eines Busteilnehmers enthalten sind.

Fig. 2 zeigt exemplarisch ein Interbus-System für eine Steuer- und Datenübertragungsanlage 5. An den Interbus 10 sind eine Master-Steuereinrichtung 20 und drei Busteilnehmer 30, 40 und 50 angeschaltet. Es sei ausdrücklich darauf hingewiesen, daß dies eine beispielhafte Ausführungsform ist, wobei die Erfindung auf andere Feldbusse sowie auf Systeme aus mehreren zusammengeschalteten Feldbussen anwendbar ist. Der Busteilnehmer 30 umfaßt beispielhafterweise ein als Steuereinrichtung für eine Drehmaschine 110 und einen Schweißroboter 120 dienendes digitales Eingangsmodul 32, das eine in Fig. 3 gezeigte Bus-Anschalteinrichtung 70 sowie eine sicherheitsbezogene Schaltungsanordnung 80 und eine nicht näher dargestellte Steuerlogikeinrichtung 34 aufweisen kann. Ferner ist dem Busteilnehmer 30 ein digitales Ausgangsmodul 36 zugeordnet, das im vorliegenden Beispiel mit der Drehmaschine 110 und dem Schweißroboter 120 verbunden ist. Das digitale Ausgangsmodul 36 kann Bestandteil des Busteilnehmers 30 oder ein separater Busteilnehmer sein. Das digitale Ausgangsmodul 36 kann außerdem eine nicht näher dargestellte mit Sensoren 100 und 102 verbundene Steuerlogikeinrichtung 38 aufweisen. Wie in Fig. 2 dargestellt, ist eine zentrale Versorgungseinrichtung 68 über ein einziges Versorgungskabel 69 zum einen mit den nicht näher dargestellten Steuerlogikeinrichtungen 34 und 38, der Bus-Anschalteinrichtung 70 und der sicherheitsbezogenen Schaltungsanordnung 80 und zum anderen mit der Drehmaschine 110 und dem Schweißroboter 120 verbunden.

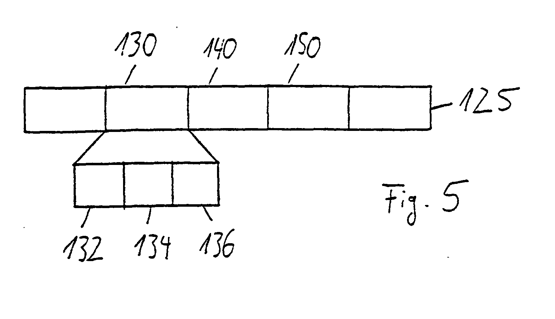

In Fig. 3 ist der Busteilnehmer 30 in Blockschaltbildform detaillierter dargestellt. Der Busteilnehmer 30 ist über die Busanschalteinrichtung 70 an den Interbus 10 angeschaltet. Die sicherheitsbezogene Schaltungsanordnung 80, die nicht näher dargestellten Steuerlogikeinrichtungen 34 und 38, die Drehmaschine 110, der Schweißroboter 110 sowie die Bus-Anschalteinrichtung 70 sind über das Versorgungskabel 69 mit der zentralen Stromversorgungseinrichtung 68 verbunden. Der besseren Übersichtlichkeit wegen sind nicht alle Verbindungen dargestellt. Die Busanschalteinrichtung 70 kann einen ASIC-Baustein aufweisen, auf dem das an sich bekannte Interbus-Datenübertragungsprotokoll implementiert ist. Ferner ist in dem Busteilnehmer 30 die sicherheitsbezogene Schaltungsanordnung 80 implementiert, die eine sicherheitstechnische Überwachung des Busteilnehmers 30 übernehmen kann. Die Sicherheitsfunktionen, die die sicherheitstechnische Schaltungsanordnung 80 ausführen kann, sind in verschiedenen Normen bereits definiert. Insbesondere kann die sicherheitsbezogene Schaltungsanordnung im Falle einer Fehlfunktion der Drehmaschine 110 und/oder des Schweißroboters 120 ein Fehlersignal erzeugen, das bewirkt, daß die fehlerhafte Drehmaschine 110 und/oder der Schweißroboter 120 über einen mit dem Sicherheitsbaustein 90 verbundenen Schalter 172 von dem gemeinsamen Versorgungskabel 69 abgetrennt werden, während die übrigen Komponenten weiterhin über das Versorgungnskabel 69 mit der Versorgungseinrichtung 68 verbunden sind und somit betriebsfähig bleiben. Darüber hinaus lassen sich alle denkbaren Sicherheitsfunktionen durch die sicherheitsbezogene Schaltungsanordnung 80 verwirklichen. Dazu weist die sicherheitsbezogene Schaltungsanordnung 80 einen Sicherheitsbaustein 90 auf, in dem ein vorbestimmtes Sicherheitsprotokoll, das bekannt sein kann, implementiert ist. Der Sicherheitsbaustein 90 führt beispielsweise in Übereinstimmung mit der EN 954-1 regelmäßige Selbsttests durch. Dazu ist eine Ausgangsleitung 94 mit Schaltern 95 und 96 verbunden, über die die Sensoren 100 bzw. 102 mit den Eingängen 92 und 93 verbunden sind. Bei diesen Selbsttests handelt es sich zum Beispiel um RAM-, ROM- oder CPU-Tests. Der Sicherheitsbaustein 90 weist beispielsweise zwei Eingänge 92 und 93 auf, die mit einem Sensor 100 bzw. 102 verbunden sind, die den zu überwachenden Einrichtungen zugeordnet sind. Beispielsweise überwacht der Sensor 100 die Drehzahl einer Drehmaschine 110 und der Sensor 102 einen Schweißroboter 120. Auch die Sensoren 100 und 102 sind an das Versorgungskabel 69 angeschaltet. Der Ausgang des Sensors 100 ist, wie bereits gezeigt, mit dem Eingang 92 des Sicherheitsbausteins 90 und unmittelbar mit einem Eingang der Busanschalteinrichtung 70 verbunden. Auf ähnliche Weise ist der Ausgang des Sensors 102 mit dem Eingang 93 des Sicherheitsbausteins 90 und unmittelbar mit einem Eingang der Bus-Anschalteinrichtung 70 verbunden. Der Sicherheitsbaustein 90 dient unter anderem dazu, die von den Sensoren 100 und 102 kommenden Eingangsdaten, nachfolgend als die eigentlichen sicherheitsbezogenen Daten bezeichnet, zu negieren, und als sicherheitsbezogene negierte Daten der Bus-Anschalteinrichtung 70 zuzuführen. Darüber hinaus erzeugt der Sicherheitsbaustein 90 aus den negierten sicherheitsbezogenen Daten und/oder aus den nicht negierten sicherheitsbezogenen Daten eine Prüfinformation, die ebenfalls der Bus-Anschalteinrichtung 70 zugeführt wird. Die sicherheitsbezogenen Daten, die negierten sicherheitsbezogenen Daten und die Prüfinformation bilden die sicherheitsbezogene Information. Diese Maßnahme sorgt dafür, das Sicherheitsverhalten des Interbus-Systems zu verbessern, da die Datenübertragungssicherheit erhöht wird. Natürlich ist es möglich, nur die sicherheitsbezogenen Daten der Bus-Anschalteinrichtung 70 zuzuführen. Es sei noch einmal erwähnt, daß es sich bei den sicherheitsbezogenen Daten um die eigentlichen Zustandsdaten des Busteilnehmers 30, spezieller um die Zustandsdaten der an ihn angeschalteten zu sichernden Einrichtungen 110 und 120 handelt. Die Bus-Anschalteinrichtung 70 erzeugt einen gewöhnlichen Datenrahmen, beim Beispiel des Interbus-Systems einen Summenrahmen, in dem hintereinander die Eingangsdaten der angeschalteten Busteilnehmer 30, 40 und 50 enthalten sind, die zur Master-Steuereinrichtung 20 übertragen werden sollen. Fig. 5 zeigt einen beispielhaften Interbus-Summenrahmen 125, der z.B. ein sogenanntes Loop-Back-Wort enthält, das die Master-Steuereinrichtung 20 erzeugt hat. Ein weiteres Feld ist der Prüfsumme gewidmet. In den Feldern 130, 140 und 150 sind die Nutzdaten des Busteilnehmers 30, 40 bzw. 50 enthalten. Der Summenrahmen 125 wird einem Buszyklus zur Master-Steuereinrichtung 20 übertragen. Erfindungsgemäß hat die Bus-Anschalteinrichtung 70 nunmehr die Aufgabe, die sicherheitsbezogenen Informationen des Busteilnehmers 30 in das ihm zugeordnete Feld 130 einzuschreiben. In unserem Beispiel werden die sicherheitsbezogenen Daten der Sensoren 100 und 102 in das Feld 132, die negierten sicherheitsbezogenen Daten in das Feld 134 und die berechnete Prüfinformation in das Feld 136 eingeschrieben. Es sei angemerkt, daß die in den Feldern 132, 134 und 136 stehenden sicherheitsbezogenen Daten entweder das gesamte Nutzdatenfeld 130 des Busteilnehmers 30 besetzen und in einem separaten Buszyklus übertragen werden oder aber nur einen Teil des Nutzdatenfeldes 150 belegen und somit zusammen mit den Nutzdaten des Busteilnehmers 30 in demselben Buszyklus zur Master-Steuereinrichtung 20 übertragen werden können. Dadurch kann eine effektivere Datenübertragung erzielt werden. Die Busteilnehmer 30, 40 und 50 können nicht nur sicherheitsbezogene Informationen zur Master-Steuereinrichtung 20 übertragen, sondern im Gegenzug auch sicherheitsbezogene Daten oder Informationen von der Master-Steuereinrichtung 20 empfangen. Dazu liest die Bus-Anschalteinrichtung 70 aus einem Nutzdatenfeld eines Summenrahmens die für den Busteilnehmer 30 bestimmten sicherheitsbezogenen Informationen aus, die wiederum aus den eigentlichen sicherheitsbezogenen Daten, den negierten sicherheitsbezogenen Daten und einer Prüfinformation, die allesamt, wie weiter unten noch beschrieben wird, in der Master-Steuereinrichtung 20 erzeugt werden. Die Bus-Anschalteinrichtung 70 weist beispielsweise zwei Ausgänge 72, 73 auf. An dem Ausgang 72 ist über einen Schalter 170 die Drehmaschine 110 und an den Ausgang 73 über einen Schalter 180 der Schweißroboter 120 angeschaltet. Über die Schalter 170 und 180 können die Drehmaschine 110 und der Schweißroboter 120 im Bedarfsfall von dem Interbus-System getrennt werden. Über die Schalter 170 und 180 werden insbesondere Steuerdaten, Prozeß- und Parameterdaten zu der Drehmaschine 110 bzw. dem Schweißroboter 120 oder Parameter- und Prozeßdaten von diesen zur Bus-Anschalteinrichtung übertragen. Die Ausgänge der Schalter 170 und 180 sind mit dem Sicherheitsbaustein 90 verbunden. Die Bus-Anschalteinrichtung 70 ist ebenfalls mit dem Sicherheitsbaustein 90 verbunden, um die von der Master-Steuereinrichtung 20 empfangenen sicherheitsbezogenen Informationen diesem zuzuführen. Die von der Master-Steuereinrichtung 20 empfangenen sicherheitsbezogenen Daten entsprechen vorbestimmten Sicherheitsfunktionen, die von dem Sicherheitsbaustein 90 ausgeführt werden. Dazu ist der Sicherheitsbaustein 90 ebenfalls mit den Schaltern 170 und 180 verbunden. Der Sicherheitsbaustein 90 erhält von der Bus-Anschalteinrichtung 70 die von der Master-Steuereinrichtung 20 kommenden sicherheitsbezogenen Daten, negierten sicherheitsbezogenen Daten und die Prüfinformation, die er zur Ermittlung der entsprechenden Sicherheitsfunktion benötigt. Beispielsweise interpretiert der Sicherheitsbaustein 90 die von der Master-Steuereinrichtung 20 kommenden sicherheitsbezogenen Daten dahin, daß die Drehzahl der Drehmaschine 110 einen kritischen Wert überschritten hat, und daß beispielsweise eine Person in den Sicherheitsbereich des Schweißroboters 120 eingedrungen ist. Daraufhin wird eine vorbestimmte Sicherheitsfunktion ausgelöst, die bewirkt, daß die Schalter 170, 172 und 180 geöffnet werden, so daß die Drehmaschine 110 und der Schweißroboter 120 von dem INTERBUS 10 und der Versorgungseinrichtung 68 abgetrennt werden können. Mit der Zurückführung der Ausgänge der Schalter 170, 172 und 180 auf den Sicherheitsbaustein 90 wird die Sicherheit des Systems weiter verbessert. So ist es denkbar, daß die von der Master-Steuereinrichtung 20 kommenden sicherheitsbezogenen Information derart verfälscht worden sind, daß sie einen fehlerfreien Zustand widerspiegeln. Tatsächlich aber sind in der Drehmaschine 110 und dem Schweißroboter 120 Fehler aufgetreten. Durch die rückgeführten Ausgänge der Schalter 170, 172 und 180 ist der Sicherheitsbaustein 90 in der Lage, die tatsächlichen Zustandswerte mit den von der Master-Sicherheitseinrichtung 20 empfangenen sicherheitsbezogenen Informationen zu vergleichen und die Schalter 170, 172 und 180 zu öffnen oder offen zu halten, wenn die Daten nicht übereinstimmen.

Der Sicherheitsbaustein 90 kann weitere Maßnahmen in Übereinstimmung mit der EN 954-1 enthalten, wie z.B. den erwähnten regelmäßig durchgeführten Selbsttest sowie einen Timer, der beispielsweise nach 40 ms die Schalter 170 und 180 öffnet, um die Drehmaschine 110 und den Schweißroboter 120 in einen sicheren Zustand zu schalten, wenn keine gültigen sicherheitsbezogenen Daten erkannt worden sind.

Fig. 4 zeigt ein Blockschaltbild der in Fig. 2 dargestellten Master-Steuereinrichtung 20. Allerdings sind nur die wesentlichen Merkmale dargestellt. Die Master-Steuereinrichtung 20 enthält eine übergeordnete Steuereinheit 200, deren Funktion später noch ausführlich beschrieben wird. Darüber hinaus ist in der Master-Steuereinrichtung 20 eine sicherheitsbezogene Schaltungsanordnung 210 implementiert. Ferner weist die Master-Steuereinrichtung 20 eine nicht dargestellte Empfangseinrichtung auf, die aus den Nutzdatenfeldern eines empfangenen Summenrahmen, beispielsweise aus dem in Fig. 5 gezeigten Summenrahmen 125, die sicherheitsbezogenen Informationen der Busteilnehmer 30, 40 und 50 auslesen kann. Beispielhaft werden die in dem Nutzdatenfeld 130 übertragenen sicherheitsbezogenen Daten des Busteilnehmers 30 betrachtet. Die Empfangseinrichtung führt die eigentlichen sicherheitsbezogenen Daten, die in dem Unterfeld 132 enthalten sind, einer ersten Prüfschaltung 220 zu. Die negierten im Unterfeld 134 enthaltenen sicherheitsbezogenen Daten werden einer zweiten Prüfschaltung 225 zugeführt. Die im Unterfeld 136 übertragene Prüfinformation wird sowohl der Prüfschaltung 220 als auch der Prüfschaltung 225 zugeführt. Die Prüfschaltungen 220 und 225 werten die empfangenen Daten aus. Die Prüfungschaltung 220, die die eigentlichen sicherheitsbezogenen Daten verarbeitet, ist mit einer logikschaltung 230 verbunden und führt ihre Ausgangsdaten der übergeordneten Steuereinheit 200 zu, während die Prüfschaltung 225 ausgangsseitig mit einer Logikschaltung 235 verbunden. Die übergeordnete Steuereinheit 200 erzeugt unter Ansprechen auf das Ausgangssignal der Prüfschaltung 220 ein von den sicherheitsbezogenen Daten des Busteilnehmers 30 abhängiges Steuersignal, das der Logikschaltung 230 und der Logikschaltung 235 zugeführt wird. Die Logikschaltung 235 erzeugt aus dem Ausgangssignal der Prüfschaltung 225 und dem Steuersignal der übergeordneten Steuereinrichtung 200 die eigentlichen sicherheitsbezogenen Daten, die für den Busteilnehmer 30 bestimmt sind. Die Logikschaltung 230 ermittelt aus dem Steuersignal der übergeordneten Steuereinheit 200 und den Ausgangsdaten der Prüfschaltung 220 ein Ausgangssignal, das einer Schaltung 240 zugeführt wird, die ein Ausgangssignal liefert, das den negierten sicherheitsbezogenen Daten der Logikschaltung 235 entspricht. Die Schaltung 240 erzeugt ferner entweder eine Prüfinformation aus den negierten sicherheitsbezogenen Daten und/oder aus den eigentlichen sicherheitsbezogenen Daten. Die eigentlichen sicherheitsbezogenen Daten, die negierten sicherheitsbezogenen Daten und die Prüfinformation, die zusammenfassend als sicherheitsbezogene Information bezeichnet werden, werden von der sicherheitsbezogenen Schaltungsanordnung 210 wieder in das Nutzdatenfeld eines Summenrahmens eingeschrieben, das für den Busteilnehmer 30 bestimmt ist. Die Master-Steuereinrichtung 20 ist auch in der Lage, die sicherheitsbezogenen informationen aller angeschalteter Busteilnehmer 30, 40 und 50 auf diese Art und Weise zu verarbeiten und in die entsprechenden Nutzdatenfelder eines Summenrahmens einzuschreiben.

Unter der Steuerung der übergeordneten Steuereinheit 200 kann die sicherheitsbezogene Schaltungsanordnung 210 der Master-Steuereinrichtung 20 während jedes Buszyklus oder in vorbestimmten Buszyklen vorbestimmte, d. h. eindeutig definierte sicherheitsbezogene Informationen in den, den Busteilnehmern 30, 40 und 50 zugeordneten Nutzdatenfeldern eines Summenrahmens zu den Busteilnehmern 30, 40, 50 übertragen. Die sicherheitsbezogenen Einrichtungen 80 der Busteilnehmer 30, 40 und 50 sind derart ausgebildet, daß sie unter Ansprechen auf den tatsächlichen Zustand des jeweiligen Busteilnehmers bzw. auf den Zustand der an den Busteilnehmer angeschalteten Eingabe-/Ausgabeseinrichtungen die empfangenen vorbestimmten sicherheitsbezogenen Daten verändert oder unverändert zur Master-Steuereinrichtung 20 zurücksenden können. Die Master-Steuereinrichtung 20 vergleicht die in den Nutzdatenfeldern des Summenrahmens empfangenen Busteilnehmer-spezifischen, sicherheitsbezogenen Informationen mit den vorbestimmten sicherheitsbezogenen Informationen. Stimmen die sicherheitsbezogenen Informationen überein, werden keine Sicherheitsfunktionen ausgelöst. Wenn allerdings die empfangenen sicherheitsbezogenen Informationen nicht mit den vorbestimmten sicherheitsbezogenen Informationen übereinstimmen, kann unter der Steuerung der übergeordneten Steuereinheit 200 die sicherheitsbezogene Schaltunfgsanordnung 210 sofort entsprechende sicherheitsbezogene Informationen erzeugen, die entsprechenden Sicherheitsfunktionen entsprechen. Diese sicherheitsbezogenen Informationen werden entweder von der sicherheitsbezogenen Schaltungsanordnung 210 der Master-Steuereinrichtung 20 verwendet, um beispielsweise eine NotAus-Funktion auszulösen, die das gesamte System in einen sicheren Zustand fährt. Andererseits ist es möglich, daß diese sicherheitsbezogenen Informationen zu den angeschalteten Busteilnehmern 30, 40 und 50 übertragen werden, deren sicherheitsbezogene Schaltungsanordnungen 70 unter Ansprechen auf die empfangenen sicherheitsbezogenen Informationen die jeweiligen Sicherheitsfunktionen auslösen. Um die Sicherheit des Gesamtsystems zu verbessern, können die vorbestimmten sicherheitsbezogenen Informationen ein zweites Mal zu dem Busteilnehmern 30, 40 und 50 übertragen werden, die dann wiederum in Abhängigkeit ihres Zustandes diese vorbestimmten sicherheitsbezogenen Informationen verändert oder unverändert zur Master-Steuereinrichtung 20 zurücksenden.

## Patentansprüche

1. System zur Verkabelung einer Steuer- und Datenübertragungsanlage (5), die wenigstens einen seriellen Feldbus (10), an den eine übergeordnete Steuereinrichtung (20) und mehrere Busteilnehmer (30, 40, 50) angeschaltet sind, und ein einziges mit einer zentralen Energieversorgungseinrichtung (68) verbundenes Energieversorgungskabel zur Speisung von den Busteilnehmern (30, 40, 50) zugeordneten Lastkomponenten (110, 120) aufweist,
**dadurch gekennzeichnet, dass**
das einzig Energieversorgungskabel (69), die zentrale Energieversorgungseinrichtung (68) sowohl mit den Logik-Bausteinen (34, 38, 70, 80) der Busteilnehmer (30, 40, 50) als auch mit den Lastkomponenten (110, 120) verbindet,
wobei wenigstens in einem Busteilnehmer eine sicherheitsbezogene Schaltungseinrichtung (80) implementiert ist, die in Abhängigkeit eines gemeldeten Fehlerzustandes wenigstens eines fehlerhaften Logik-Bausteins und/oder wenigstens einer fehlerhaften Lastkomponente den, fehlerhaften Logik-Baustein und/oder die fehlerhafte Lastkomponente von dem Energieversorgungskabel (69) abschaltet.

2. Verkabelungssystem nach Anspruch 1,
**dadurch gekennzeichnet, daß**
der serielle Feldbus (10) einen Lichtwellenleiter zur Übertragung von Nutzdaten und/oder sicherheitsbezogenen Steuerdaten umfaßt.

3. Verkabelungssystem nach Anspruch 1 oder 2,
**dadurch gekennzeichnet, daß**
das Versorgungskabel (69) einen Schutzleiter, einen, ein Bezugspotential führenden Leiter und einen, ein vorbestimmtes Versorgungspotential führenden Leiter umfaßt.

4. Verkabelungssystem nach Anspruch 2 oder 3,
**dadurch gekennzeichnet, daß**
der serielle Feldbus (10) und das Energieversorgungskabel (69) in einem gemeinsamen Kabel angeordnet sind.

5. Verkabelungssystem nach einem der Ansprüche 1 bis 4,
**dadurch gekennzeichnet, dass**
der übergeordneten Steuereinrichtung (20) eine sicherheitsbezogene Schaltungsanordnung (210) zugeordnet ist, die unter Ansprechen auf einen gemeldeten Fehlerzustand wenigstens eines fehlerhaften Logik-Bausteins und/oder wenigstens einer fehlerhaften Lastkomponente die dem entsprechenden Busteilnehmer (30, 40, 50) zugeordnete sicherheitsbezogene Schaltungseinrichtung (80) veranlasst, den fehlerhaften Logik-Baustein und/oder die fehlerhafte Lastkomponente von dem Energieversorgungskabel (69) abzuschalten.

## Claims

1. System for cable connection of a control and data transmission installation (5) which comprises at least one fieldbus (10) to which a superordinate control device (20) and a plurality of bus subscribers (30, 40, 50) are connected and which comprises a single energy supply cable connected to a central energy supply device (68) for supplying load components (110, 120) assigned to the bus subscribers (30, 40, 50),
**characterised in that**
the single energy supply cable connects (69) the central energy supply device (68) to the logic components (34, 38, 70, 80) of the bus subscribers (30, 40, 50) and also to the load components (110, 120), whereby in at least one bus subscriber a safety-related switching device (80) is implemented which, in dependence upon a reported error status of at least one defective logic component and / or at least one defective load component, disconnects the defective logic component and / or the defective load component from the energy supply cable (69).

2. Cable connection system according to claim 1,
**characterised in that**
the serial fieldbus (10) comprises an optical waveguide for transmitting useful data and / or safety-related control data.

3. Cable connection system according to claim 1 or 2,
**characterised in that**
the supply cable (69) comprises a protective conductor, a conductor guiding a reference potential and a conductor guiding a predefined supply potential.

4. Cable connection system according to claim 2 or 3,
**characterised in that**
the serial fieldbus (10) and the energy supply cable (69) are arranged in a shared cable.

5. Cable connection system according to one of the claims 1 to 4,
**characterised in that**
a safety-related switching arrangement (210) is assigned to the superordinate control device (20) which, in response to a reported error status of at least one defective logic component and / or at least one defective load component, triggers the safety-related switching device (80) assigned to the corresponding bus subscriber (30, 40, 50) to disconnect the defective logic component and / or the defective load component from the energy supply cable (69).

## Revendications

1. Système de câblage d'un dispositif de commande et de transmission de données (5) qui comprend au moins un bus de secteur sériel (10), auquel sont raccordés un dispositif de commande prioritaire (20) et plusieurs participants au bus (30, 40, 50), et un unique câble d'alimentation en énergie qui est relié avec un dispositif central d'alimentation en énergie (68) et qui sert à alimenter des composants de charge (110, 120) attribués aux participants au bus (30, 40, 50), **caractérisé en ce que** l'unique câble d'alimentation en énergie (69) relie le dispositif central d'alimentation en énergie (68) aussi bien avec les modules logiques (34, 38, 70, 80) des participants au bus (30, 40, 50) qu'avec les composants de charge (110, 120), dans lequel dans au moins un participant au bus est placé un dispositif de commutation se rapportant à la sécurité (80) qui, en fonction d'un état de défectuosité signalé d'au moins un module logique défectueux et/ou d'au moins un composant de charge défectueux, déconnecte du câble d'alimentation en énergie (69), le module logique défectueux et/ou le composant de charge défectueux.

2. Système de câblage selon la revendication 1,
**caractérisé en ce que**
le bus de secteur sériel (10) comprend un guide d'ondes lumineuses pour la transmission de données d'exploitation et/ou de données de commande se rapportant à la sécurité.

3. Système de câblage selon la revendication 1 ou 2,
**caractérisé en ce que**
le câble d'alimentation (69) comprend un conducteur de protection, un conducteur véhiculant un potentiel de référence et un conducteur véhiculant un potentiel prédéterminé d'alimentation.

4. Système de câblage selon la revendication 2 ou 3,
**caractérisé en ce que**
le bus de secteur sériel (10) et le câble d'alimentation en énergie (69) sont placés dans un câble commun.

5. Système de câblage selon l'une quelconque des revendications 1 à 4,
**caractérisé en ce**
**qu'**au dispositif de commande prioritaire (20) est attribué un ensemble de commutation se rapportant à la sécurité (210) qui, en réponse à un état de défectuosité signalé d'au moins un module logique défectueux et/ou d'au moins un composant de charge défectueux demande au dispositif de commutation se rapportant à la sécurité (80) attribué au participant au bus correspondant (30, 40, 50) de déconnecter du câble d'alimentation en énergie (69) le module logique défectueux et/ou le composant de charge défectueux.
